# EUROPÄISCHE PATENTANMELDUNG

(11) **EP 1 187 429 A2**
(43) Veröffentlichungstag der Anmeldung: **13.03.2002**
(21) Anmeldenummer: 01440257.2
(22) Anmeldetag: 06.08.2001
(51) Int. Cl.: H04L 29/12

(54) **Adressierungsserver**

(30) Priorität: 29.08.2000 DE 10042267
(71) Anmelder: ALCATEL, 75008 Paris (FR)
(72) Erfinder: Lautenschlager, Wolfgang, 71287 Weissach-Flacht (DE); Krank, Lothar, 71254 Ditzingen (DE); Weik, Hartmut, 70195 Stuttgart (DE)
(74) Vertreter: Rausch, Gabriele, Dr.

(57) **Zusammenfassung**

Die Erfindung betrifft ein Verfahren, einen Adressierungsserver und ein Computerprodukt zur Unterstützung der Erbringung von Kommunikationsdiensten mittels eines IP-Kommunikationsnetzes. Eine Anforderungsnachricht (R(A1)) mit einer Hyper-Adresse (A1), die aus einer Dienstkennung eines Kommunikationsdienstes und einer diensterbringerunabhängigen universellen Adresse eines Teilnehmer gebildet wird, wird über das IP Kommunikationsnetz (KN) zu einem Adressierungsserver (IP-NPS) gesendet. Der Adressierungsserver (IP-NPS) erzeugt aus der Dienstkennung und der dienstbetreiberunabhängigen universellen Adresse des Teilnehmers mittels Zugriff auf eine Diensterbringer-Portierungsdatenbank (DB) eine diensterbringerspezifische Hyper-Adresse (A2) des Teilnehmers. Diese diensterbringerspezifische Hyper-Adresse des Teilnehmers wird zur Erbringung dieses Kommunikationsdienstes in eine IP Adresse (IPA) übersetzt.

## Beschreibung

Die Erfindung betrifft ein Verfahren, einen Adressierungsserver und ein Computerprodukt zur Unterstützung der Erbringung von Kommunikationsdiensten mittels eines IP-Kommunikationsnetzes, wobei bei dem Verfahren eine diensterbringerspezifische Hyper-Adresse in eine IP Adresse übersetzt wird.

Die Erfindung geht von der heute üblichen Adressierung von Teilnehmern bei der Inanspruchnahme von Kommunikationsdiensten im Internet aus.

Bei dem Kommunikationsdienst "email" wird die Adresse eines Teilnehmers aus dem Namen der Mailbox des Teilnehmers und dem Domain-Namen des Servers gebildet, der den Teilnehmer den Dienst "email" bereitstellt. Der Domain-Name dieses Servers wird hierbei nicht direkt zum Routing im Internet verwendet. Ein Domainname-Server übersetzt den Teil der Adresse, der für das Routing zum Ziel-Mail-Server benötigt wird, nämlich den Domain-Namen, in eine numerische IP Adresse.

Beispiel für eine beim Kommunikationsdienst "email" für die Adressierung eines Teilnehmer verwendete Adresse: richard@operatorl.de ; wobei "richard" den Name der Mailbox des Teilnehmers und "operator1.de" die Domain des Betreibers bezeichnet, der dem Teilnehmer den Dienst "email" bereitstellt. Der Betreibername ist somit in irgendeiner Form Bestandteil der Adresse. Die Struktur dieser Adresse ermöglicht somit die Betreiber-Portabilität der Adresse a priori nicht. Wechselt ein Teilnehmer zu einem anderen Dienstbetreiber, beispielsweise zu einem anderen Internet-Zugangsbetreiber, so benötigt er eine neue Adresse.

Der Erfindung liegt nun die Aufgabe zugrunde, die Vermittlung von Daten durch ein IP Kommunikationsnetz effizienter zu gestalten.

Diese Aufgabe wird gelöst durch ein Verfahren, einen Adressierungsserver und ein Computerprodukt zur Unterstützung der Erbringung von Kommunikationsdiensten mittels eines IP-Kommunikationsnetzes nach der Lehre von Anspruch 1, 6 bzw. 7.

Der Erfindung liegt hierbei der Gedanke zugrunde, für ein IP Kommunikationsnetz einen Adreßportabilitätserver bereitzustellen, der für verschiedenartige, über das IP Kommunikationsnetz bereitgestellte Kommunikationsdienste, die jeweils von verschiedenen Diensterbringern erbracht werden, eine betreiber- und dienstunabhängige Adressierung ermöglicht. Dieser Adreßportabilitätserver übersetzt hierfür eine Hyper-Adresse, die aus einer Dienstkennung und einer diensterbringerunabhängigen universellen Adresse aufgebaut ist, in eine dienstspezifische und diensterbringerspezifische "normale" Internet Hyper-Adresse.

Der Vorteil der Erfindung besteht darin, daß eine universelle Adressierung von Teilnehmern unabhängig von Kommunikationsdienst und Diensterbringer ermöglicht wird, wodurch sich die Effektivität der Vermittlung von Daten erhöht.

Weiter wird die Benutzerfreundlichkeit erhöht: Es wird dem Benutzer ermöglicht, einfache und leicht zu merkende Adressen zu verwenden. Die wesentlichen Adressteile werden für verschiedene Dienste verwendet, der Benutzer muß sie sich somit nur einmal merken. Der Diensterbringer kann beliebig wechseln, ohne daß dies zu einer Änderung der Adresse führt, so daß die Adressen für eine lange Zeit Gültigkeit haben.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationssystems mit einem erfindungsgemäßen Adressierungsserver.
- Fig. 2: zeigt ein Ablaufdiagramm zur Verdeutlichung des Ablaufs eines erfindungsgemäßen Verfahrens.
- Fig. 3: zeigt eine funktionelle Darstellung des Adressierungsservers nach Fig. 1.

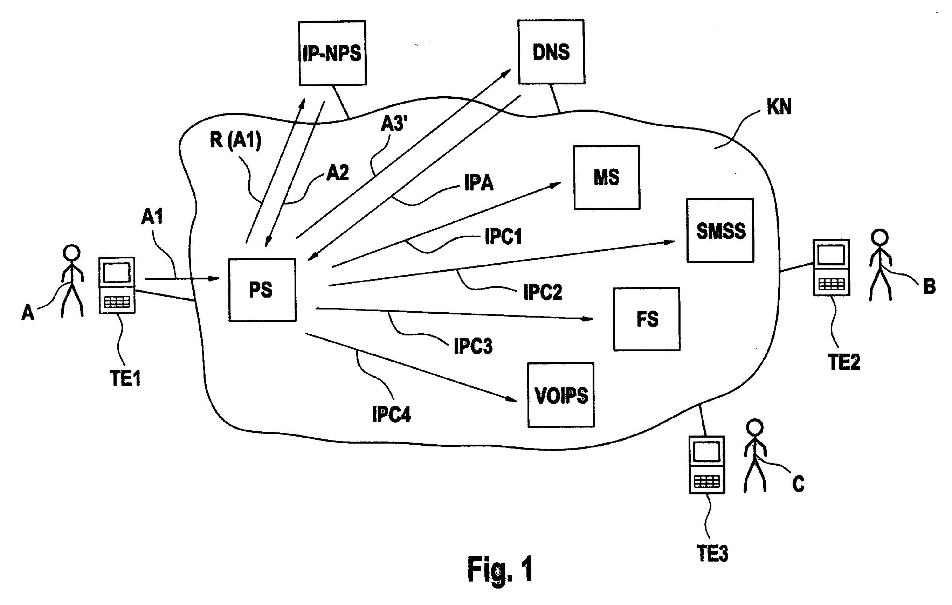

Fig. 1 zeigt ein Kommunikationssystem mit einem Kommunikationsnetz KN, mehreren Servern IP-NPS, DNS, MS, SMSS, FS, VOIPS und mehreren Endgeräten TE1 bis TE3, die jeweils einem Teilnehmer A, B bzw. C zugeordnet sind.

Bei dem Kommunikationsnetz KN handelt es sich um ein IP Kommunikationsnetz, d. h. um ein Kommunikationsnetz, das als Schicht 3 Protokoll ein IP Protokoll (IP = Internet Protokoll) verwendet. Über das Kommunikationsnetz KN werden den Teilnehmern A bis C beispielsweise Datenkommunikationsdienste, aber auch synchronen Sprach- oder Bildkommunikationsdienste bereitgestellt.

Das Kommunikationsnetz KN kann von mehreren organisatorisch und/oder physikalisch voneinander getrennten Teilnetzen gebildet werden. Diese Teilnetze sind beispielsweise unterschiedlichen Netzbetreibern zugeordnet. Die Teilnetze können auch auf unterschiedlichen physikalischen Netzen basieren oder selbst wieder aus unterschiedlichen physikalischen Netzen zusammengesetzt sein, die über Router, Bridges oder Gateways miteinander verbunden sind. Bei den einen Teilnetzen handelt es sich beispielsweise um auf Ethernet oder Token-Ring MAC Protokollen (MAC = Medium Access Control) basierenden Zugangsnetzen und bei anderen Teilnetzen um auf ATM (= Asynchronous Transfer Mode) oder DQDB (Double Queue Distributed Bus) basierenden Backbone-Netze.

Als Schicht 3 Protokoll wird in sämtlichen dieser Teilnetze ein IP Protokoll (IP = Internet Protokoll) verwendet. Als Transportschicht setzt auf diesem Schicht 3 Protokoll als Transportprotokoll das TCP (Transport Capability Part) oder das UDP Protokoll (UDP = User Datagram Protocol) auf. Auf diesen Schicht 4 Protokollen bauen sodann die über das Kommunikationsnetz KN bereitgestellten Kommunikationsdienste auf.

Bei den Endgeräten TE1 bis TE3 handelt es sich um Computer, die mit entsprechender Software und Hardware zum Anschluß an ihnen räumlich zugeordnete Teilnetze des Kommunikationsnetzes KN versehen sind. Es kann sich bei den Endgeräten TE1 bis TE3 aber auch um IP-Telephone oder WEB-Phones oder um WAP oder UMTS fähige Mobilfunk-Endgeräte (WAP = Wireless Application Protocol, UMTS = Universal Mobile Telecommunication System) handeln. Die Anzahl der Endgeräte TE1 bis TE3 ist beispielhaft gewählt. Weiter verfügen die Endgeräte TE1 bis TE3 über Applikationsprogramme, die ihnen die Nutzung einer oder mehrerer der über das Kommunikationsnetz KN bereitgestellten Kommunikationsdienste ermöglichen.

Über den Server PS ermöglicht der Netzzugangsbetreiber des Teilnehmers A diesem den Zugang zu dem Kommunikationsnetz KN1 mittels des Endgeräts TE1. Der Server PS stellt dem Endgeräte TE1 weitere Dienste zur Verfügung, die über das Kommunikationsnetz KN erbracht werden. Beispiele für solche Dienste sind Gatewayfunktionen für den Zugang zum WWW (World Wide Web), email Dienste, Homepages, Newsgroups.

Es ist auch möglich, auf den Server PS zu verzichten. Es ist hierbei vorteilhaft, daß zumindest einige Funktionen des Servers PS direkt von dem Endgerät TE1 erbracht werden. Beispielsweise kann das Endgerät TE1 in der selber Weise wie im Folgenden in Bezug auf den Server PS beschrieben mit den Servern IP-NPS, DNS, MS, SMSS, und FS kommunizieren. Damit werden diese im Folgenden in Bezug auf den Servers PS beschriebenen Funktionen direkt von dem Endgerät TE1 erbracht.

Die Server MS, SMSS, FS und VOIPS steuern jeweils die Erbringung eines speziellen Kommunikationsdienstes für ein oder mehrere Teilnehmer, beispielsweise für die Teilnehmer B und C. Die Server MS, SMSS, FS und VOIP bestehen jeweils aus einem oder aus mehreren Rechnern, die mit dem Kommunikationsnetz KN verbunden sind und auf denen Applikationsprogramme aufsetzen, die jeweils diese Steuerfunktion wahrnehmen. Es ist aber auch möglich, daß ein solcher Rechner die Funktion mehrerer der Server MS, SMSS, FS und VOIPS erbringt. Die Anzahl der Server MS, SMSS, FS und VOIPS ist beispielhaft gewählt: Jeder der von den Servern MS, SMSS, FS und VOIPS angebotenen Kommunikationsdienste kann von mehreren Dienstbetreibern angeboten werden, die dann jeweils über mindestens einen derartigen Server verfügen.

Der Server MS stellt einen email Dienst bereit. Der Server SMSS stellt einen Short Message Dienst bereit, der Kurznachrichten an Mobilfunkendgeräte übermittelt. Der Server FS stellt einen Fax Dienst bereit, der elektronische Dokumente in ein Fax-Format übersetzt und als Fax an Faxendgeräte übermittelt. Der Server VOIPS stellt einen VOIP Dienst (VOIP = Voice over IP) bereit, der den Aufbau von synchronen Sprachkanälen über das Kommunikationsnetz KN ermöglicht. Bei dem Server VOIPS kann es sich beispielsweise auch um ein VOIP Gateway und einen Gatekeeper handeln. Es ist auch möglich, daß weitere Server, die beispielsweise eine Videokommunikation oder eine Videokonferenz ermöglichen, entsprechend den Servern MS, SMSS, FS und VOIPS in das Kommunikationssystem eingebunden sind.

Bei dem Server IP-NPS handelt es sich um einem Adressierungsserver, also um einen Server, der eine Adress-Konvertierung durchführt. Der Server IP-NPS übersetzt eine Hyper-Adresse, die aus einer Dienstkennung eines Kommunikationsdienstes und einer diensterbringerunabhängigen universellen Adresse eines Teilnehmer gebildet wird, in eine diensterbringerspezifische Hyper-Adresse.

Bei dem Server DNS handelt es sich um einen Domainname-Server. Dieser Server übersetzt einen Domain-Namen in eine IP Adresse.

Um mittels eines speziellen Kommunikationsdienstes mit einem anderen Teilnehmer, beispielsweise mit dem Teilnehmer B zu kommunizieren, wird von dem Endgerät TE1eine Hyper-Adresse des Teilnehmers B, nämlich eine Hyper-Adresse A1, zu dem Server PS übermittelt. Der Begriff Hyper-Adresse ist in diesem Zusammenhang so zu verstehen, daß es sich um eine übergeordnete Adresse handelt, die nicht direkt für das Routing (Level 3) im Kommunikationsnetz KN verwendet werden kann. Die Hyper-Adresse A1 kann hierbei auch Teil eines Datensatzes sein, der mittels des speziellen Kommunikationsdienstes an den Teilnehmer B kommuniziert werden soll. Die Hyper-Adresse A1 wird aus einer Dienstkennung des speziellen Kommunikationsdienstes und einer diensterbringerunabhängigen universellen Adresse des Teilnehmers B gebildet.

Diensterbringerunabhänigige universelle Adresse bedeutet, daß diese Adresse den Teilnehmer B unabhängig von dem speziellen gewählten Kommunikationsdienst und unabhängig von dem Diensterbringer bezeichnet, der den Kommunikationsdienst erbringt: Die universelle Adresse bleibt so die gleiche, unabhängig davon, welcher Kommunikationsdienst gewählt wird und unabhängig davon, ob der Teilnehmer B oder auch der Teilnehmer A den Diensterbringer des gewählten Kommunikationsnetzes wechselt. Eine solche universelle Hyperadresse ist beispielsweise der Name des Teilnehmers in Verbindung mit weiteren spezifizierenden Eigenschaften wie Adresse, Adressbestandteile, Geburtstag, aber auch Namenskürzel, Synonyme und Fernsprechrufnummern.

Die Dienstkennung der Adresse A1 kann beispielsweise aus einer Abkürzung des gewünschten Kommunikationsdienstes bestehen, beispielsweise m für email, f für Fax, s für Kurznachricht an Mobilfunkendgeräte, v für VOIP Kommunikation. Eine weitere Möglichkeit besteht darin, spezielle Sonderzeichen zu verwenden, beispielsweise @ für email , f mit einem Kringel für Fax usw. Eine weitere Möglichkeit besteht natürlich darin, daß der gewünschte Kommunikationsdienst namentlich bezeichnet ist, beispielsweise "fax" den Fax-Dienst bezeichnet.

Der Server PS sendet sodann eine Anforderungsnachricht R(A1) mit der Hyper-Adresse A1, die ja aus einer Dienstkennung eines Kommunikationsdienstes und einer diensterbringerunabhängigen universellen Adresse eines Teilnehmer gebildet ist, über das Kommunikationsnetz KN zu dem Server IP-NPS, der die Funktion eines Adressierungsservers erbringt. Für die Adressierung der Anforderungsnachricht R(A1) benötigt der Server PS die Kenntnis der IP Adresse des Servers IP-NPS. Die Anforderungsnachricht R(A1) besteht beispielsweise aus einer UDP Nachricht, die an die IP Adresse des Servers IP-NPS adressiert ist und die Hyperadresse A1 transportiert.

Der Server IP-NPS erzeugt aus der Dienstkennung und der dienstbetreiberunabhängigen universellen Adresse des Teilnehmers mittels Zugriff auf eine Diensterbringer-Portierungsdatenbank eine diensterbringerspezifische Hyper-Adresse des Teilnehmers. Der Server erzeugt somit aus der Adresse A1 eine Adresse A2, bei der es sich um eine diensterbringerspezifische Hyper-Adresse des Teilnehmers B handelt.

Die Form der diensterbringerspezifischen Hyper-Adresse ist sowohl in ihrem Format abhängig von dem gewünschten Kommunikationsdienst als auch in ihrem Inhalt abhängig von dem Diensterbringer, der diesen Kommunikationsdienst erbringen soll. Sie adressiert somit auch den Diensterbringer, der den gewählten Kommunikationsdienst erbringen soll. Beispiel für eine solche Hyper-Adresse ist eine email Adresse des Teilnehmers B, die aus der Bezeichnung der Mailbox des Teilnehmers B und aus dem Domain-Namen des Servers MS besteht, der diesen Kommunikationsdienst für den Teilnehmer B bereitstellt. Sowohl die Bezeichnung der Mailbox also auch der Domain Name sind abhängig von dem Erbringer des Dienstes und das Format dieser Hyper-Adresse ist abhängig von dem gewählten Kommunikationsdienst.

Die diensterbringerspezifische Hyper-Adresse des Teilnehmers B, also die Adresse A2, wird zur Erbringung dieses Kommunikationsdienstes in eine IP Adresse IPA übersetzt. Diese IP Adresse spezifiziert je nach gewähltem Dienst einen Diensterbringungsserver, also einen der Server MS, SMSS, FS oder VOIPS oder auch ein Endgerät des Teilnehmers B. Diese Übersetzung wird von dem Server DNS erbracht. Es ist jedoch auch möglich, daß diese Übersetzungsfunktion von dem Server IP-NPS oder dem Server PS erbracht wird.

Zur Übersetzung der Adresse A2 sendet der Server einen Teil der Adresse A2, nämlich eine Adresse A3, an den Server DNS. Bei der Adresse A3 handelt es sich um den Teil der Adresse A3, der den Diensterbringer des gewählten Kommunikationsdienstes spezifiziert. Wird ein email Dienst gewählt, so wird beispielsweise die Adresse A3 von dem Domain-Namen des Mailservers gebildet, der den email Dienst dem Teilnehmer B bereitstellt. Es ist natürlich auch möglich, daß die gesamte Adresse A2 von dem Server PS an den Server DNS gesendet wird und dieser aus der Adresse A2 die Adresse IPA ermittelt.

Mittels den Adressen A2 und IPA initiiert der Server PS sodann eine Kommunikation mit dem Teilnehmer B über den gewählten Kommunikationsdienst. Die Adresse IPA wird dazu verwendet, um denjenigen der Server MS, SMSS, FS oder VOIPS innerhalb des Kommunikationsnetzes KN zu adressieren, der für die Steuerung des gewählten Dienstes im Kommunikationsnetz KN zuständig ist. Dieser hängt von Dienstart, Diensterbringer, z.B. Dienstbetreiber, gewähltem Zielteilnehmer und u. U. auch vom initiierenden Teilnehmer ab. Die Adresse A2 wird zur Adressierung des Teilnehmers B gegenüber diesem Server benötigt. Wird so eine email Kommunikation zum Teilnehmer A gewählt, so wird eine Dienstnachricht IPC1 an den Server MS gesendet. Bei der Wahl eines anderen Kommunikationsdienstes wird jeweils eine entsprechende Dienstnachricht IPC2, IPC3 bzw. IPC4 an die Server SMSS, FS oder VOIPS gesendet. Die Dienstnachricht kann hierbei auch nur einen Teil der Adresse A2 enthalten. Wenn es sich bei der Adresse A2 beispielsweise um eine email Hyper-Adresse handelt, so braucht die Dienstnachricht IPC1 nur die Bezeichnung der Mailbox des Teilnehmers B enthalten.

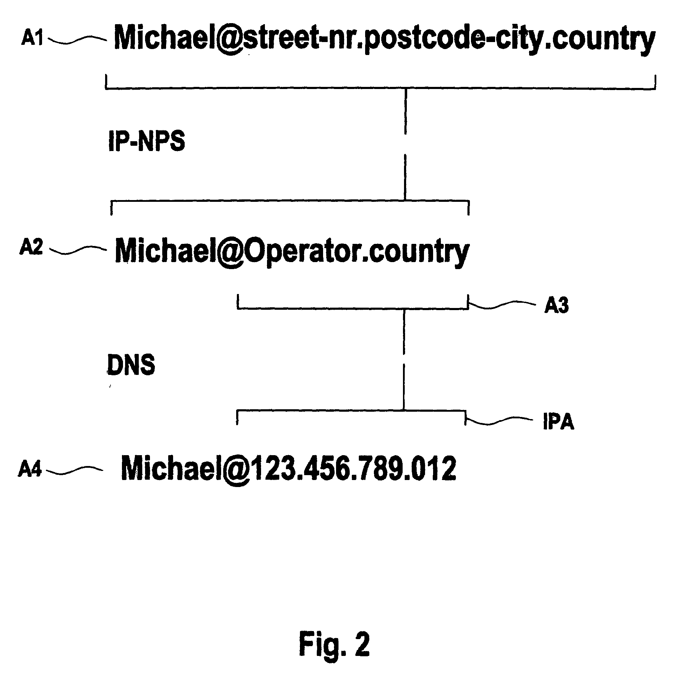

Anhand von Fig. 2 wird die Adresskonvertierung nach Fig. 1 nochmals beispielhaft verdeutlicht.

Fig. 2 zeigt die Server IP-NPS und DNS, die Adressen A1 bis A3 und IPA, und eine Adresse A4.

Die Adresse A1 wird aus einem Teil des Namens des Teilnehmers B und dessen Adresse als universelle Hyper-Adresse und der Dienstkennung @ gebildet. Die Adresse A1 wird von dem Server IP-NPS in die Adresse A2 übersetzt. Ein Teil der Adresse A2, die Adresse A3 wird von dem Server DNS in die Adresse IPA übersetzt. Im Server PS liegt damit die Adresse A4 vor, mittels der die gewünschte Kommunikation zu dem Teilnehmer B adressiert werden kann. Es ist hierbei auch möglich, daß die Funktion des Servers DNS von dem Server IP-NPS erbracht wird und von dem Server IP-NPS auf die Anforderungsnachricht R(A1) die Adresse A4 an den Server PS übermittelt wird.

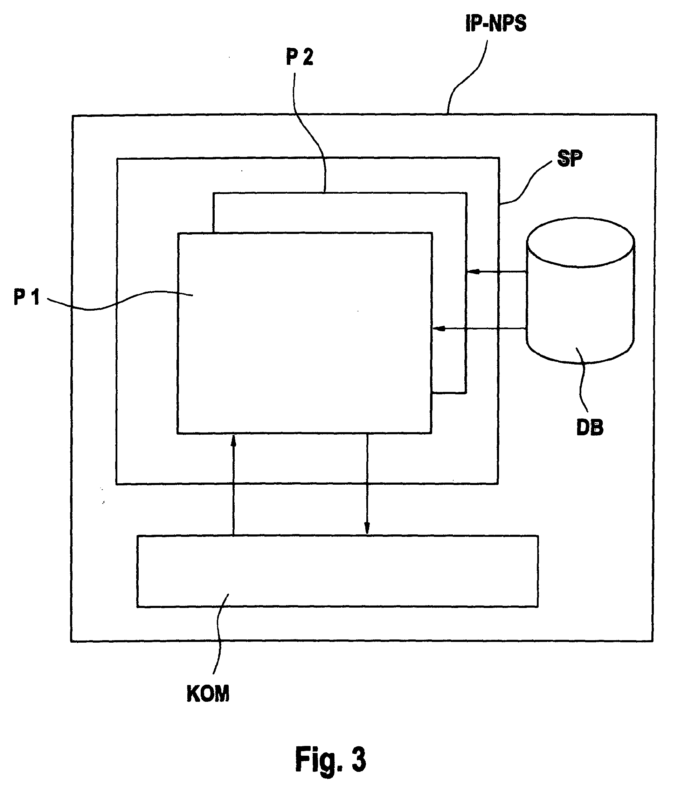

Anhand von Fig. 3 wird nun die genaue Funktionsweise des Servers IP-NPS verdeutlicht.

Der Server IP-NPS wird von einem oder mehreren miteinander verbundenen Rechnern gebildet, auf denen eine Software-Plattform bestehend beispielweise aus Betriebsystem und Datenbanksystem aufsetzt. Auf der von diesen Komponenten gebildeten Systemplattform läuft ein Applikationsprogramm ab, das die im folgenden beschriebene Funktionsweise des Servers IP-NPS steuert. Dieses Applikationsprogramm bildet sowohl für sich gesehen oder aufgezeichnet auf einem computerlesbaren Speichermedium ein Softwareprodukt SP, das in Verbindung mit der Systemplattform die im folgenden beschriebene Funktionsweise des Servers IP-NPS steuert.

Aus funktioneller Sicht weist der Server IP-NPS eine Kommunikationseinheit KOM, eine Datenbank DB und mehrere Prozesse P1 und P2 auf, die beim Ablauf des Applikationsprogramms des Softwareprodukts SP auf der Systemplattform des Servers IP-NPS erzeugt werden.

Die Kommunikationseinheit KOM stellt die zur Kommunikation über das Kommunikationsnetz KN notwendigen Funktionseinheiten bereit. Dies sind insbesondere die zur Bearbeitung des UDP/IP Protokollstacks notwendigen Funktionseinheiten.

Bei der Datenbank DB handelt es sich um eine Diensterbringer-Portierungsdatenbank. In der Datenbank DB sind Informationen darüber abgespeichert, welcher Kommunikationsdienst für welche Teilnehmer von welchem Diensterbringern erbracht werden. Hierfür sind in der Datenbank DB zu jedem Teilnehmer in Abhängigkeit von mehreren Kommunikationsdiensten Informationen über den zuständigen Diensterbringer abgespeichert. Der Teilnehmer kann in der Datenbank DB durch ein, aber auch durch mehrere diensterbringerunabhängige universelle Adressen des Teilnehmers spezifiziert sein. Ein Kommunikationsdienst kann durch eine, aber auch durch mehrere Dienstkennungen des Kommunikationsdienstes spezifiziert sein. Der zuständige Diensterbringer kann auch von weiteren Informationen über den den Kommunikationsdienst initiierenden Teilnehmer abhängig sein. Die Informationen über den zuständigen Diensterbringer können aus einer diensterbringerspezifische Hyper-Adresse oder aber auch aus dem Teil einer diensterbringerspezifischen Hyper-Adresse bestehen.

Die Funktion der Prozesse P1 und P2 wird beispielhaft anhand der Funktion des Prozesses P1 verdeutlicht.

Der Prozess P1 wird erzeugt, wenn der Server IP-NPS eine Anforderungsnachricht mit einer Hyper-Adresse über das IP Kommunikationsnetz empfängt, die aus einer Dienstkennung eines Kommunikationsdienstes und einer diensterbringerunabhängigen universellen Adresse eines Teilnehmer gebildet wird. Der Prozeß P1 erzeugt sodann aus der Dienstkennung und der dienstbetreiberunabhängigen universellen Adresse des Teilnehmers mittels Zugriff auf die Datenbank DB eine diensterbringerspezifische Hyper-Adresse des Teilnehmers. Diese Hyper-Adresse sendet er sodann an den Server PS zurück. Sodann wird der Prozess P1 wieder gelöscht. Der Prozeß P1 greift hierbei mit der Dienstkennung und der dienstbetreiberunabhängigen universellen Adresse des Teilnehmers als Suchschlüssel auf die Datenbank DB zu und erhält als Ergebnis die dieser Kombination in der Datenbank DB zugeordneten Information über den zuständige Diensterbringer. Mittels dieser Information erzeugt der Prozeß P1 sodann die diensterbringerspezifische Hyper-Adresse des Teilnehmers.

Es ist hierbei auch möglich, daß der Server IP-NPS mehrere hierarchisch gegliederten Teil-Adressierungsserver umfaßt. Die Anforderungsnachricht R(A1) wird somit von Teil-Adressierungsserver zu Teil-Adressierungsserver weitergeleitet, bis der Teil-Adressierungsserver ermittelt worden ist, der die oben beschriebenen Funktionen für die Anforderungsnachricht R(A1) erbringt. Dies ist insbesondere vorteilhaft, wenn die Adresse A1 hierarchisch strukturiert aufgebaut ist und somit beispielsweise Land, Stadt, Straße, .. als Teilinformationen ausgliederbar sind.

## Patentansprüche

1. Verfahren zur Unterstützung der Erbringung von Kommunikationsdiensten mittels eines IP-Kommunikationsnetzes (KN), wobei bei dem Verfahren eine diensterbringerspezifische Hyper-Adresse (A3) in eine IP Adresse (IPA) übersetzt wird,
**dadurch gekennzeichnet, daß** eine Anforderungsnachricht (R(A1)) mit einer Hyper-Adresse (A1), die aus einer Dienstkennung eines Kommunikationsdienstes und einer diensterbringerunabhängigen universellen Adresse eines Teilnehmer gebildet wird, über das IP Kommunikationsnetz (KN) zu einem Adressierungsserver (IP-NPS) gesendet wird, daß der Adressierungsserver (IP-NPS) aus der Dienstkennung und der dienstbetreiberunabhängigen universellen Adresse des Teilnehmers mittels Zugriff auf eine Diensterbringer-Portierungsdatenbank (DB) eine diensterbringerspezifische Hyper-Adresse (A2) des Teilnehmers erzeugt, und daß diese diensterbringerspezifische Hyper-Adresse des Teilnehmers zur Erbringung dieses Kommunikationsdienstes in eine IP Adresse (IPA) übersetzt wird.

2. Verfahren nach Anspruch 1, **dadurch gekennzeichnet, daß** zwei oder mehr diensterbringerunabhängige universelle Adressen von dem Adressierungsserver (IP-NPS) ein und demselben Teilnehmer zugeordnet werden.

3. Verfahren nach Anspruch 1, **dadurch gekennzeichnet, daß** die diensterbringerunabhängige universelle Adresse (A1) des Teilnehmers eine postalische Adresse des Teilnehmers umfaßt.

4. Verfahren nach Anspruch 1, **dadurch gekennzeichnet, daß** die diensterbringerunabhängige universellen Adresse (A1) des Teilnehmers eine Fernsprechrufnummer des Teilnehmers umfaßt.

5. Verfahren nach Anspruch 1, **dadurch gekennzeichnet, daß** der Adressierungsserver mehrere hierarchisch gegliederte Teil-Adressierungsserver umfaßt.

6. Adressierungsserver (IP-NPS) zur Unterstützung der Erbringung von Kommunikationsdiensten mittels eines IP-Kommunikationsnetzes (KN), **dadurch gekennzeichnet, daß** der Adressierungsserver so ausgestaltet ist, daß er, wenn er eine Anforderungsnachricht (R(A1)) mit einer Hyper-Adresse (A1), die aus einer Dienstkennung eines Kommunikationsdienstes und einer diensterbringerunabhängigen universellen Adresse eines Teilnehmers gebildet wird, über das IP Kommunikationsnetz (KN) empfängt, aus der Dienstkennung und der dienstbetreiberunabhängigen universellen Adresse des Teilnehmers mittels Zugriff auf eine Diensterbringer-Portierungsdatenbank (DB) eine diensterbringerspezifische Hyper-Adresse (A2) des Teilnehmers erzeugt.

7. Softwareprodukt zur Unterstützung der Erbringung von Kommunikationsdiensten mittels eines IP-Kommunikationsnetzes (KN), **dadurch gekennzeichnet, daß** das Softwareprodukt in Verbindung mit einem Computer einen Adressierungsserver bildet, der so ausgestaltet ist, daß er, wenn er eine Anforderungsnachricht (R(A1)) mit einer Hyper-Adresse (A1), die aus einer Dienstkennung eines Kommunikationsdienstes und einer diensterbringerunabhängigen universellen Adresse eines Teilnehmer gebildet wird, über das IP Kommunikationsnetz (KN) empfängt, aus der Dienstkennung und der dienstbetreiberunabhängigen universellen Adresse des Teilnehmers mittels Zugriff auf eine Diensterbringer-Portierungsdatenbank (DB) eine diensterbringerspezifische Hyper-Adresse (A2) des Teilnehmers erzeugt.
